# EUROPEAN PATENT APPLICATION

(11) **EP 3 336 737 A1**
(43) Date of publication of application: **20.06.2018**
(21) Application number: 16205131.2
(22) Date of filing: 19.12.2016
(51) Int. Cl.: G06F 21/53, G06F 21/57, G06F 21/71

(54) **EXTENSION OF SECURE PROPERTIES AND FUNCTIONALITIES OF A REAL HARDWARE SECURITY MODULE**

(71) Applicant: Safenet Canada Inc., Ottawa, Ontario K2E 7M6 (CA)
(72) Inventor: HUAPAYA, Luis Miguel, Ottawa, Ontario K2E 7M6 (CA)
(74) Representative: Thomas, Christine Marie Catherine

(57) **Abstract**

The present invention relates to a method to extend secure properties and functionalities of a real Hardware Security Module (HSM) (301) to software secure enclaves (104) having their own security features insuring that executable code (105) and data (105) are always encrypted in memory and over communication bus and insuring that only the code (105) within the enclave (104) is allowed to access data (105) in plain-text, said secure enclaves (104) becoming instantiated virtual HSM, all sharing the same root of trust with the single real HSM (301), the method comprising the steps of, for the HSM (301) requesting (S1,S2) the secure enclave (104) to provide a form of guaranteed measurement (GMF) proving that the secure enclave (104) has been measured and that the content of the secure enclave (104) is what it is supposed to be according to the requirements of the HSM (301), analyzing the received form of guaranteed measurement (GMF) to check the content is what it is supposed to be and, if yes, establishing (S3) a secure communication (SC) with the guaranteed secure enclave (104) and delegating at least a secure functionality to the secure enclave (104), if no, repudiating the secure enclave (104).

## Description

### FIELD OF THE INVENTION

The present invention relates to a method to extend secure properties and functionalities of a real Hardware Security Module (HSM) to software secure enclaves having their own security features insuring that executable code and data are always encrypted in memory and over communication bus and insuring that only the code within the enclave is allowed to access data in plain-text.

The invention also pertains to a device including a secure enclave and to a real Hardware Security Module (HSM) adapted to implement the corresponding steps of the method of the invention.

### BACKGROUND OF THE INVENTION

High assurance Hardware Security Modules (HSM), also referred to as a Cryptographic Modules (CM) are usually implemented as fixed capacity hardware, with fixed performance capabilities and fixed storage capacity. Given the rapid adoption of cloud based services, customers are looking more and more at services and solutions that are able to scale according to the level of performance needed at any given time. As such, existing solutions with fixed capabilities can prove too cumbersome in an environment that demands a high level of elasticity.

The goal of the invention is to allow existing HSMs to be more elastic and scale upwards to meet customer demand at a moment's notice by leveraging new 'security enclave' technology being introduced in the market by several companies. Such secure enclave are characterized by the fact that they have their own security features insuring that executable code and data are always encrypted in memory and over communication bus and insuring that only the code within the enclave is allowed to access data in plain-text.

More precisely, late in 2015, a new feature, called SGX, which stands for "Software Guard Extensions" was introduced in computer chips. This new feature allows an application program to create secure enclaves within which executable code and data can reside such that all of the code and data is always encrypted in memory and over the bus and only the code within the enclave is allowed to 'see' the data in plain-text. This ensures that absolutely no one on a computer, regardless of access rights, i.e. even root/Administrator are able to peer into the enclave or tamper with its contents.

Diverse manufacturers are getting ready to release similar technologies, hereby called "secure enclaves" within the remainder of this document. The invention described therein applies to all types of security enclaves with similar capabilities.

This secure enclave technology helps mitigate one of significant problems encountered in secure computing, that of keeping cryptographic material secure in memory while it is being used by an application program. Without this, it would be easy for a skilled attacker to steal cryptographic material stored in computer memory (RAM). Secure enclaves drastically increase the assurance level of a cryptographic key in memory.

However, no security insurance is given that the secure enclave is safe, typically not tampered while an operation is required to be performed. This weakness prevents to delegate sensitive tasks to such secure enclaves.

Further alternative and advantageous solutions would, accordingly, be desirable in the art.

### SUMMARY OF THE INVENTION

The present invention aims at insuring an additional level of security to secure enclaves in order to enable HSM to delegate or extend their tasks to such secure enclaves.

The present invention is defined, in its broadest sense, as a method to extend secure properties and functionalities of a real Hardware Security Module (HSM) to software secure enclaves having their own security features insuring that executable code and data are always encrypted in memory and over communication bus and insuring that only the code within the enclave is allowed to access data in plain-text, said secure enclaves becoming instantiated virtual HSM, all sharing the same root of trust with the real HSM, the method comprising the steps of, for the HSM:
- monitoring the installation of a secure application program on a hardware entity other than the real HSM, said application program hosting unsecure application code and a secure enclave, itself hosting a content according to the HSM requirements including a secure enclave code;
- requesting the secure enclave to provide a form of guaranteed measurement proving that the secure enclave has been measured and that the content of the secure enclave is what it is supposed to be according to the requirements of the HSM,
- analyzing the received form of guaranteed measurement to check the content is what it is supposed to be,
- if yes, establishing a secure communication with the guaranteed secure enclave and delegating at least a secure functionality to the secure enclave, if no, repudiating the secure enclave.

Given the advent of secure enclaves, it is now possible to extend some capabilities of an HSM such that some or all of the processing that usually happens within the secure perimeter of an HSM could now be securely hosted within a secure enclave. Through this mechanism, the capabilities of an HSM could easily be scaled far beyond the original capabilities of the HSM, thus giving customers the scalability and elasticity they desire in cloud computing applications. The use of a guaranteed measurement of the secure enclave provides additional security to HSM. The content of the secure enclave is thus guaranteed as authentic and not tampered. The guaranteed measurement provides proof of the code identity to the HSM. With the invention a single real HSM is necessitated while having enlargeable security functionalities.

According to a specific feature, the installation of the secure application program comprises a step of creation of the secure enclave.

This enables the HSM to monitor the creation of the secure enclave itself. The verification of the secure enclave using the guaranteed measurement is thus strengthen.

According to a first embodiment, the form's requesting is done when the secure enclave is connecting to the HSM for the first time. This embodiment gives a guarantee on the right installation and nature of the secure enclave. It is up to the code within the enclave to ensure than incoming data is parsed and analyzed to ensure integrity of incoming data. By construction of the secure enclaves, the data that is already within the enclave cannot be modified by anything other than the enclave code itself. If the enclave code is trusted, then by extension, the robustness of enclave data is also trusted according to the same principles used within HSM's.

It should be noted that, currently, the code within the enclave cannot be modified once the enclave is initialized, i.e. code pages for the code are read-only at the hardware level. As such, except if poorly written code allows malformed data to come into the enclave, data within the enclave could not be compromised. The only way to modify data within the enclave is through enclave code. Proper enclave code will check the integrity and robustness of incoming data before persisting said incoming data within the enclave itself. Enclave code can also modify existing enclave data through transformation. If the code is trusted, then the user must trust that any activities will not create malformed data. This is again the same principle used within HSM's.

In another embodiment, the form's requesting is done at each operation requesting the secure enclave to perform operations for the account of the HSM.

This embodiment enables verification of the integrity of the secure enclave each time it is requested to perform sensitive operations on behalf of the HSM. Security is thus enhanced. This embodiment is prospective as, currently, secure enclave contents cannot be modified except by secure enclave code once the enclave is initialized. However giving an attestation on a per transaction basis would be useful for future potential secure enclaves' technologies where secure modifications of the code after initialization of the secure enclave would be possible. It has to be noted that risk to the data, as opposed to the code, is not relevant since the data will always be secured by the code in a secure enclave.

However, according to a specific feature, the method comprises a step, following the monitoring step, of requesting an initial form of guaranteed measurement guaranteeing both the identity and integrity of the secure enclave code and initial secure enclave data.

Such a guaranteed measurement enables to be exhaustive on the verification of the content of the secure enclave. Strictly speaking, as long as the code is trusted to do the right thing, then there should be no situations where the integrity of the data is compromised since only the code within the enclave is able to access/modify the data within the enclave. Thus, even if it is the responsibility of the secure enclave code to ensure integrity of incoming data that is persisted within the enclave, this feature can strengthen the security.

Advantageously, the method comprises iterative steps of receiving updates of secure enclave data.

This enables to always have the possibility to check the integrity of data even once they are modified. Here again, the measurement given by the enclave is of the code and initial data within the enclave at the time it is initialized. This measurement does not change once the data in the enclave is modified. It is the responsibility of the immutable code within the enclave to ensure data integrity within the enclave. Indeed, the enclave code should never change once it is measured, only the data, and the data can only change in a way that is implemented within the secure code.

However, this feature could apply in specific implementation of a secure enclave where additional security could be required in addition to the secure enclave code constitution itself. In other implementations, as long as proof of code integrity can be given for each transaction, the integrity of data would not be an issue.

According to an advantageous feature, comprising the steps of, for the HSM, establishing a secure communication with the secure enclave, requesting changes in the content of the secure enclave through the secure communication, monitoring these changes including a request for a form of guaranteed measurement and checking this form of guaranteed measurement according to the requested changes.

This enables to only enter in the guaranteed measurement modifications performed by the HSM. It enables to control the security of the modifications of the secure enclave and the conformity of the modifications as monitored by the HSM.

The present invention also relates to device comprising an application program of the invention and to an HSM having extension of functionalities thanks to secure enclaves.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 schematically represents the environment in which the invention stands;
- Figure 2 shows a time sequence of a method of the invention;
- Figure 3 schematically show a device of the invention implementing a secure enclave of the invention;
- and
- Figure 4 schematically shows an HSM of the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

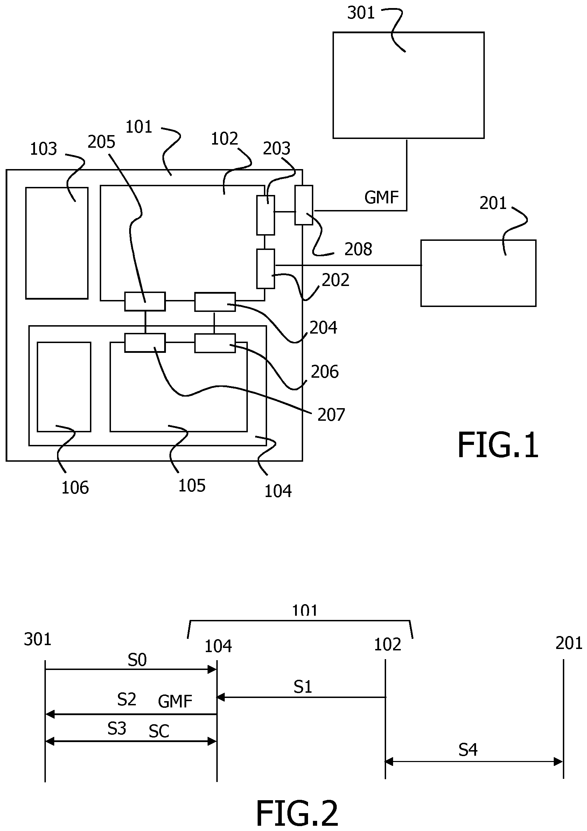

Figure 1 schematically represents the environment in which the invention stands. This environment includes a real Hardware Security Module 301 connected to an interface 208 of a hardware device having an application program 101. The hardware device is a device of the invention implementing a secure enclave 104 of the invention.

The invention consists of an application program 101 which hosts both an unsecure application code 102 and a secure enclave 104 which itself hosts secure enclave code 105. The application code 102 can read and write to application data 103 and the secure enclave code 105 has read and write access to secure enclave data 106. However the application code 102 as well as any other code, privileged or otherwise, outside of the secure enclave 104 is unable to access the secure enclave 104 including secure enclave data 106. The secure enclave data 106 is encrypted in RAM and over the system bus and can only be accessed in plain-text by the secure enclave code 105 of the same secure enclave 104. Moreover, advantageously, the secure enclave 104 security is enforced by hardware such that the secure enclave code 105 and the secure enclave data 106 are protected from access coming from privileged code at the operating system level, from BIOS instructions, from privileged users such as Administrators and root and from hardware features as SMM, etc... By definition, a secure enclave 104 is only valid if it protects the secure enclave code 105 and the secure enclave data 106 from such access vectors.

As such, a secure enclave 104 can never consist of a software implementation since said software implementation offers no assurance against tampering from the administrators managing the software. This is a critical aspect of the secure enclave 104 insofar as, without said security, it would be impossible for the secure enclave 104 to offer the commensurate assurance required to host sensitive cryptographic keys and to execute sensitive cryptographic operations.

The secure enclave 104 contains both code 105 and data 106 which are highly protected within the perimeter of the secure enclave 104 and can only be accessed through highly defined interfaces 204 → 206 which allow untrusted application code 102 to execute trusted secure enclave code 105 without actually being able to access said code 105 or associated secure enclave data 106. The invention is based on such implementations of a secure enclave.

The secure enclave code 105 can in turn callback into the untrusted application code 102 using another highly defined interface 207 → 205, thus allowing the secure enclave code 105 to execute untrusted application code 102 and to pass back data to said code 102. Through these mechanisms and specific interfaces, highly sensitive code and data can be securely protected within the secure enclave 104 while still being functionally accessible by untrusted application code 102. All these features are defined and implemented in currently existing implementations of secure enclaves.

All of the components of application code 102, application data 103 the secure enclave 104 and associated secure enclave code 105 and secure enclave data 106 are all hosted within the same application program 101.

The invention leverages the functional capabilities of a secure enclave 104 running within an application program 101 in order to achieve the two below described goals. Firstly, the secure enclave 104 allows the application program 101 to accurately duplicate the cryptographic functionality of an HSM 301 while ensuring compatible assurance levels for the security of cryptographic material. In essence, the invention allows for the instantiation of one or more virtual HSM's all of which share the same root of trust with the single real HSM 301 or with a cluster of real HSM's. Through this facet of the invention, it would be easy to add and to remove performance capacity to an ecosystem of HSM's. Secondly, the secure enclave 104 allows the application program 101 to add new cryptographic capabilities to an HSM 301 while ensuring compatible assurance levels for the security of cryptographic material. Through this facet of the invention, it would be easy for new cryptographic functions to be added to an ecosystem of HSM's.

Figure 2 is a time sequence diagram of the method of the invention. When the application program 101 starts, the operating system instantiates only the application code 102 and the application data 103. This instantiation is preferably monitored by the HSM 301 in a step S0. It is the responsibility of the application code 102 to create and initialize the secure enclave 104 in a first step S1. It is here noted that, in cases where the secure enclave code 105 is forbidden from using operating system resources such as sockets, file system access, etc... for security reasons, it will be the responsibility of the application program 101 to act as a communication host between the secure enclave code 105 and the HSM 301. In such a case, the application program 101 would relay information from the 207 → 205 communication channel through to the 203 ←→ 208 ←→ 301 communication channel. For secure communications in the case where the application program 101 acts as the communication host between the secure enclave 104 and the HSM 301, the secure enclave code 105 will be required to encrypt outgoing communication traffic before passing it on to the application program 101 which relays it to the HSM 301.

Once the secure enclave 101 has been created and initialized by the application program 101, the secure enclave 101 will need, in a step S2, to provide the HSM 301 with a form of guaranteed measurement GM which allows the HSM 301 to know that the secure enclave 104 has been precisely measured and that the contents of the secure enclave 104 are precisely what they are supposed to be, i.e. guarantee both the identity and integrity of the secure enclave code 105 and the initial secure enclave data 106.

In preferred embodiments, this form of 'guaranteed measurement' is called 'attestation' and comes in the form of a digitally signed attestation certificate which similar in purpose to what an authentication token offers. Typically, the remote attestation is using a public domain algorithm based on Enhanced Privacy ID.

In a step S3 a secure communication is established between the HSM 301 and the secure enclave 104.

In some embodiments of the invention, it will be the responsibility of the application program 101 to act as communication host between the secure enclave 104 and the HSM 301 while the secure enclave 104 uses that 'guaranteed measurement' to establish trust with the HSM 301. Part of establishing trust between the secure enclave 104 and the HSM 301 will include, but is not limited to, the creation of a secure encrypted communication link between the secure enclave code 105 and the HSM 301 such that, once trust between the two is established, data and commands can travel securely between the two.

The establishment of trust between the secure enclave 104 and the HSM 301 means that the HSM 301 trusts the identity and integrity of the secure enclave code 105 and trusts that the behavior of said code will conform according to highly predefined parameters. It is here up to the author of the code to dictate what the code does. Thus, if the code is well known, then the behavior of the code is well understood and since the enclave secures the code and then gives a cryptographically secure measurement of the code, then the remote endpoint is able to trust, with a high assurance level, that the behavior of the code will conform to something that is very well understood, i.e. the code is not going to do something unexpected or malicious.

Such conformity includes, but is not limited to, the knowledge that any secrets stored within the secure enclave data 106, such as cryptographic material, would never be used outside of the perimeter of the secure enclave code 105 and that the secure enclave code 105 would never transmit said secrets to the untrusted application code 102, thus ensuring that sensitive secrets are always kept save within the secure enclave 104.

Given said trust with the identity, i.e. what the code does, and the integrity, i.e. that the code has not been compromised, of the secure enclave code 105, the HSM 301 would be in a position to transmit sensitive cryptographic material from the HSM 301 to the secure enclave 104 with sufficient assurance that said cryptographic material will remain secure and confidential within the secure enclave 104.

Once trust has been established between the HSM 301 and the secure enclave 104, the HSM 301 will allow for some or all cryptographic material within the HSM 301 to be transferred over to the secure enclave 104 which would in turn allows the secure enclave code 105 to use the cryptographic material stored within the secure enclave data 106 with cryptographic functions running within the secure enclave code 105.

Then in a step S4, a remote target 201, typically a service provider needing cryptographic functions to be performed by a secure service supported by the HSM 301, enters in communication with the application program 101 insuring the triggering of the secure enclave.

In some embodiments of the invention, the application program 101 will expose an interface 202 which perfectly mimics the interface of the HSM 301 such that remote targets 201 can communicate with the application program 101 using the exact same format/protocol as would be used if the remote target 201 was communicating directly with the HSM 301. Thus, the application program 101 would basically become a virtual HSM. Sensitive elements of the application program 101, such as cryptographic keys, etc... would be hosted within the secure enclave 104.

In other embodiments of the invention, the secure enclave code 105 would expose an interface 206 which perfectly mimics the functionality of the HSM 301 such that the secure enclave 104 becomes a virtual HSM within the application program 101.

Moreover, in other embodiments of the invention, either the application program 101 or the secure enclave 104 will present interfaces 202, 206 which adds new functionality compared to the functionality offered by the HSM 301. Through this embodiment of the invention, the HSM 301 could be augmented to implement/host new cryptographic capabilities that it did not have before, whereas all new functionality is hosted with a secure enclave which offers compatible assurance levels as the HSM 301.

The benefits of the invention is that, through the creation of high assurance virtual HSMs, i.e. identical behavior compared to the HSM 301, or virtual HSM extensions, i.e. new functionality compared to the HSM 301, it is now possible to scale both performance and functionality of an HSM 301 far beyond the original static performance/functionality of the HSM 301.

The invention would allow for an ecosystem which consists of thousands of virtual instances of the application program 101 across physically dispersed compute resources running simultaneously, all of which can be elastically grown or diminished to meet demand. As such, owners of HSM 301 would no longer be limited by the original performance/functionality limitations of their HSM 301 and could easily scale both performance/functionality on demand using mechanisms such as cloud computing, etc..., all the while retaining an assurance level across the entire ecosystem which is compatible with the assurance level offered by the physical HSM 301.

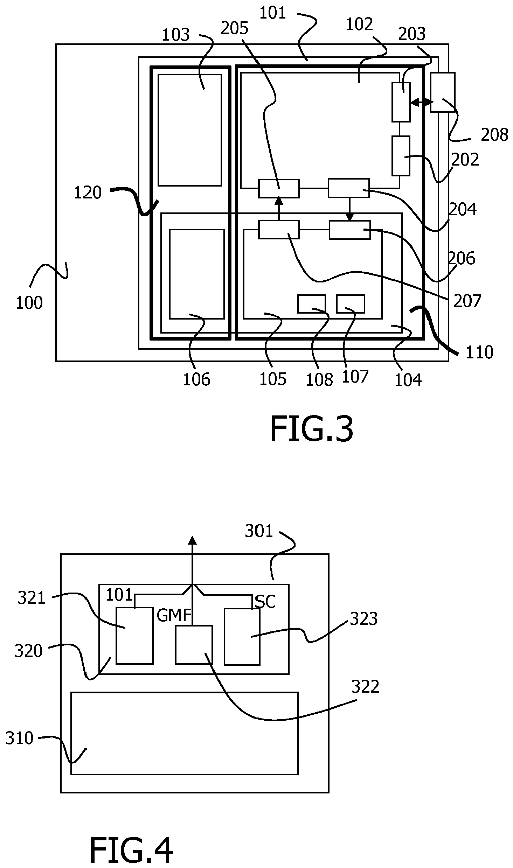

Figure 3 schematically shows a device 100 of the invention comprising an application program 101 which hosts both an unsecure application code 102 and a secure enclave 104 which itself hosts secure enclave code 105. The device 100 further includes typically a CPU processor 110 shown in bold line, itself including the part of the secure enclave 104 containing the secure enclave code 105, and a memory 120 shown in bold line, containing the secure enclave data 106. Figure 3 indeed schematizes that, basically, the CPU 110 is responsible for running all code, both secure and unsecure. Only within the confines of the CPU is the secure enclave rendered in plain-text, i.e. both code pages and data pages become plain-text within the CPU only. Within RAM, all elements of the secure enclave remain encrypted.

The secure enclave itself hosts a content according to the HSM requirements including a secure enclave code 105. The device 100 comprises an interface 208 adapted to receive requests from an HSM. A processing unit 107 is included in the secure enclave code 105 to process requests from a real HSM including requests to provide a form of guaranteed measurement GMF proving that the secure enclave 104 has been measured and that the content of the secure enclave 104 is what it is supposed to be according to the requirements of the HSM.

The secure enclave 104 further includes an attestation module 108 adapted to measure the secure enclave 104 and to create a form of guaranteed measurement GMF proving that the content of the secure enclave 104 is what it is supposed to be according to the requirements of the HSM. The attestation module 108 is actually part of the hardware with some parts in software. The CPU 110 of the device itself has instructions designed to create the attestation certificate GMF inside the host hardware where the secure enclave 104 is in. This ensures that there is a hardware root of trust for the attestation GMF.

So, while software is required to call the attestation instructions, the actual measurement and cryptographic signature of said attestation is advantageously done by hardware. The hardware doing the measurement is thus the host hardware that the secure enclave is in. The enclave 104 is inside the hardware. Thus the core parts of the attestation GMF are executed in hardware since it provides the entire process with a hardware root of trust which is much higher assurance than a software root of trust.

The secure enclave code 105 is further adapted to establish a secure communication between the secure enclave 104 and the HSM and to perform secure functionalities on behalf of the HSM delegating this functionality to the secure enclave 104.

Figure 4 schematically a real Hardware Security Module (HSM) 301 of the invention. It has a secure core 310 having secure properties and functionalities and further having the functionality to extend security properties and functionalities to software secure enclaves 104 having their own security features insuring that executable code and data are always encrypted in memory and over communication bus and insuring that only the code within the secure enclave 104 is allowed to access the data in plain-text.

The HSM 310 also has an extension module 320 adapted to monitor 321 installation of a secure application program 101 on a hardware entity 100 other than the single real HSM 301. The extension module 320 being further adapted to process 322 a form of guaranteed measurement GMF proving that the secure enclave 104 has been measured and that the content of the secure enclave 104 is what it is supposed to be according to the requirements of the HSM 301. It manages a request for the form to the secure enclave 104 and the analysis of the received form of guaranteed measurement GMF to check the content is what it is supposed to be. If yes, the extension module 320 is further adapted to monitor 323 the establishment of a secure communication SC with the guaranteed secure enclave 104 and to interact with the secure core 310 for it to delegate at least a secure functionality to the secure enclave 104, and, if no, the extension module 320 being further adapted to repudiate the secure enclave 104.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted, along with the full range of equivalents to which the claims are entitled.

## Claims

1. Method to extend secure properties and functionalities of a real Hardware Security Module (HSM) (301) to software secure enclaves (104) having their own security features insuring that executable code (105) and data (105) are always encrypted in memory and over communication bus and insuring that only the code (105) within the enclave (104) is allowed to access data (105) in plain-text, said secure enclaves (104) becoming instantiated virtual HSM, all sharing the same root of trust with the single real HSM (301), the method comprising the steps of, for the HSM (301):
- monitoring (S0) the installation of a secure application program (101) on a hardware entity (100) other than the real HSM (301), said application program (101) hosting unsecure application code (102) and a secure enclave (104), itself hosting a content (105,106) according to the HSM requirements including a secure enclave code (105);
- requesting (S1,S2) the secure enclave (104) to provide a form of guaranteed measurement (GMF) proving that the secure enclave (104) has been measured and that the content of the secure enclave (104) is what it is supposed to be according to the requirements of the HSM (301),
- analyzing the received form of guaranteed measurement (GMF) to check the content is what it is supposed to be and, if yes, establishing (S3) a secure communication (SC) with the guaranteed secure enclave (104) and delegating at least a secure functionality to the secure enclave (104), if no, repudiating the secure enclave (104).

2. Method according to claim 1, wherein the installation of the secure application program (101) comprises a step of creation of the secure enclave (104).

3. Method according to claim 1, wherein the guaranteed measurement form's (GMF) requesting is done when the secure enclave (104) is connecting to the HSM (301) for the first time.

4. Method according to claim 1, wherein the guaranteed measurement form's (GMF) requesting is done at each operation requesting the secure enclave (104) to perform operations for the account of the HSM (301).

5. Method according to claim 1, comprising a step, following the monitoring step, of requesting an initial form of guaranteed measurement (GMF) guaranteeing both the identity and integrity of the secure enclave code (105) and initial secure enclave data (106).

6. Method according to claim 1, comprising iterative steps of receiving updates of secure enclave data (106).

7. Method according to claim 1, comprising the steps of, for the HSM (301), establishing a secure communication (SC) with the secure enclave (104), requesting changes in the content of the secure enclave (104) through the secure communication (SC), monitoring these changes including a request for a form of guaranteed measurement (GMF) and checking this form of guaranteed measurement (GMF) according to the requested changes.

8. Method according to claim 1, wherein the form of guaranteed measurement (GMF) is a digitally signed attestation certificate.

9. Method according to claim 1, wherein the secure enclave code (105) being forbidden from using operating system resources, the application program (101) acts as a communication host between the secure enclave code (105) and the HSM (301), the secure enclave code (105) being required to encrypt outgoing communication traffic before passing it on to the application program (101) which relays it to the HSM (301).

10. Method according to claim 1, wherein HSM's requirements for the secure enclave code (105) include the knowledge that any secrets stored within the secure enclave data (106) would never be used outside of the perimeter of the secure enclave code (105) and that the secure enclave code (105) would never transmit said secrets to the untrusted application code (102), thus ensuring that sensitive secrets are always kept save within the secure enclave (104), said requirements being analyzable in the form of guaranteed measurements (GMF).

11. Method according to claim1, wherein the application program (101) exposes an interface which mimics the interface of the HSM (301) such that remote targets (201) can communicate with the application program (101) using the exact same format/protocol as would be used if the remote target (201) was communicating directly with the HSM (301).

12. Method according to claim 1, wherein the secure enclave code (105) exposes an interface which mimics the functionality of the HSM (301) such that the secure enclave (104) becomes a virtual HSM within the application program (101).

13. Method according to claim 1, wherein either the application program (101) or the secure enclave (104) present interfaces which adds new functionality compared to the functionality offered by the HSM (301).

14. Method according to claim 1, wherein the secure enclave (104) is enforced by hardware.

15. Device (100) including a secure enclave (104) itself hosting a content according to the HSM requirements including a secure enclave code (105), said device (100) comprising an interface (208) adapted to receive requests, the secure enclave code (105) comprising a processing unit (107) to process requests from a real HSM (301) including requests to provide a form of guaranteed measurement (GMF) proving that the secure enclave (104) has been measured and that the content of the secure enclave (104) is what it is supposed to be according to the requirements of the HSM (301), an attestation module (108) adapted to measure the secure enclave (104) and to create a form of guaranteed measurement (GMF) proving that the content of the secure enclave (104) is what it is supposed to be according to the requirements of the HSM (301), the secure enclave code (105) being further adapted to establish a secure communication (SC) between the secure enclave (104) and the HSM (301) and to perform secure functionalities on behalf of the HSM (301) delegating this functionality to the secure enclave (104).

16. Real Hardware Security Module (HSM) having a secure core having secure properties and functionalities and further having the functionality to extend security properties and functionalities to software secure enclaves having their own security features insuring that executable code and data are always encrypted in memory and over communication bus and insuring that only the code within the secure enclave is allowed to access the data in plain-text, said secure enclaves becoming instantiated virtual HSM, all sharing the same root of trust with the single real HSM, said HSM having an extension module adapted to monitor installation of a secure application program on a hardware entity other than the single real HSM, said application program hosting unsecure application code and a secure enclave, itself hosting a content according to the HSM requirements including a secure enclave code, said extension module being further adapted to request the secure enclave to provide a form of guaranteed measurement proving that the secure enclave has been measured and that the content of the secure enclave is what it is supposed to be according to the requirements of the HSM, said extension module being further adapted to analyze the received form of guaranteed measurement to check the content is what it is supposed to be, if yes, the extension module is further adapted to monitor the establishment of a secure communication with the guaranteed secure enclave and to interact with the secure core for it to delegate at least a secure functionality to the secure enclave, and, if no, the extension module being further adapted to repudiate the secure enclave.
